# EUROPÄISCHE PATENTSCHRIFT

(11) **EP 1 562 429 B1**
(45) Veröffentlichungstag und Bekanntmachung des Hinweises auf die Patenterteilung: **13.08.2008**
(21) Anmeldenummer: 03810974.0
(22) Anmeldetag: 08.11.2003
(51) Int. Cl.: A01N 57/20, A01N 47/24

(54) **VERFAHREN ZUR ERTRAGSSTEIGERUNG BEI GLYPHOSATE RESISTENTEN LEGUMINOSEN**
METHOD FOR YIELD IMPROVEMENT IN GLYPHOSATE-RESISTANT LEGUMES
PROCEDE PERMETTANT D'AUGMENTER LE RENDEMENT DE LEGUMINEUSES RESISTANT AU GLYPHOSATE

(30) Priorität: 12.11.2002 DE 10252881
(43) Veröffentlichungstag der Anmeldung: 17.08.2005
(73) Patentinhaber: BASF SE, 67056 Ludwigshafen (DE)
(72) Erfinder: OAKLEY, Peter, 67434 Neustadt (DE); FREUND, Annette, 67117 Limburgerhof (DE); SCHELBERGER, Klaus, 67161 Gönnheim (DE)
(74) Vertreter: Reitstötter - Kinzebach
(86) Internationale Anmeldenummer: PCT/EP2003/012483
(87) Internationale Veröffentlichungsnummer: WO 2004/043150

(56) Entgegenhaltungen:
- EP-A- 0 808 569
- WO-A-99/45781
- RAMSDALE B K ET AL: "Glyphosate tank-mixed with insecticides or fungicides." RES.REP.NORTH CENT.WEED SCI.SOC. (59, 280-83, 2002), XP001180180 Univ.North-Dakota-State

## Beschreibung

Die vorliegende Erfindung betrifft ein Verfahren zur Ertragssteigerung bei gegenüber Glyphosate resistenten Leguminosen, welches dadurch gekennzeichnet ist, daß man die Pflanzen oder das Saatgut mit einer Mischung enthaltend
a) eine Verbindung der Formel I 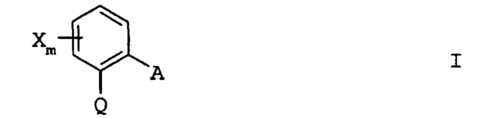 worin
   - X: Halogen, C₁-C₄-Alkyl oder Trifluormethyl;
   - m: 0 oder 1;
   - Q: C(=CH-CH₃)-COOCH₃, C(=CH-OCH₃)-COOCH₃, C(=N-OCH₃)-CONHCH₃, C(=N-OCH₃)-COOCH₃ oder N(-OCH₃)-COOCH₃;
   - A: -O-B, -CH₂O-B, -OCH₂-B, -CH=CH-B, -C≡C-B, -CH₂O-N=C(R¹)-B oder -CH₂O-N=C (R¹) -C(R²) =N-OR³, wobei
   - B: Phenyl, Naphthyl, 5-gliedriges oder 6-gliedriges Hetaryl oder 5-gliedriges oder 6-gliedriges Heterocyclyl, enthaltend ein bis drei N-Atome und/oder ein 0- oder S-Atom oder ein oder zwei O- und/oder S-Atome, wobei die Ringsysteme unsubstituiert oder substituiert sind durch einen bis drei Reste R^{a}:
   R^{a} Cyano, Nitro, Amino, Aminocarbonyl, Aminothiocarbonyl, Halogen, C₁-C₆-Alkyl, C₁-C₆-Halogenalkyl, C₁-C₆-Alkylcarbonyl, C₁-C₆-Alkylsulfonyl, C₁-C₆-Alkylsulfoxyl, C₃-C₆-Cycloalkyl, C₁-C₆-Alkoxy, C₁-C₆-Halogenalkoxy, C₁-C₆-Alkyloxycarbonyl, C₁-C₆-Alkylthio, C₁-C₆-Alkylamino, Di-C₁-C₆-Alkylamino, C₁-C₆-Alkylaminocarbonyl, Di-C₁-C₆-Alkylaminocarbonyl, C₁-C₆-Alkylaminothiocarbonyl, Di-C₁-C₆-Alkylaminothiocarbonyl, C₂-C₆-Alkenyl, C₂-C₆-Alkenyloxy, Phenyl, Phenoxy, Benzyl, Benzyloxy, 5- oder 6-gliedriges Heterocyclyl, 5- oder 6-gliedriges Hetaryl, 5- oder 6-gliedriges Hetaryloxy, C(=NOR')-OR" oder OC(R')₂-C(R")=NOR"
   wobei die cyclischen Reste ihrerseits unsubstituiert oder substituiert sind durch einen bis drei Reste R^{b}:
   R^{b} Cyano, Nitro, Halogen, Amino, Aminocarbonyl, Aminothiocarbonyl, C₁-C₆-Alkyl, C₁-C₆-Halogenalkyl, C₁-C₆-Alkylsulfonyl, C₁-C₆-Alkylsulfoxyl, C₃-C₆-Cycloalkyl, C₁-C₆-Alkoxy, C₁-C₆-Halogenalkoxy, C₁-C₆-Alkoxycarbonyl, C₁-C₆-Alkylthio, C₁-C₆-Alkylamino, Di-C₁-C₆-alkylamino, C₁-C₆-Alkylaminocarbonyl, Di-C₁-C₆-alkylaminocarbonyl, C₁-C₆-Alkylaminothiocarbonyl, Di-C₁-C₆-alkylaminothiocarbonyl, C₂-C₆-Alkenyl, C₂-C₆-Alkenyloxy, C₃-C₆-Cycloalkyl, C₃-C₆-Cycloalkenyl, Phenyl, Phenoxy, Phenylthio, Benzyl, Benzyloxy, 5- oder 6-gliedriges Heterocyclyl, 5- oder 6-gliedriges Hetaryl, 5- oder 6-gliedriges Hetaryloxy oder C(=NOR')-OR";
   R' Wasserstoff, Cyano, C₁-C₆-Alkyl, C₃-C₆-Cycloalkyl oder C₁-C₄-Halogenalkyl;
   R" Wasserstoff, C₁-C₆-Alkyl, C₃-C₆-Alkenyl, C₃-C₆-Alkinyl, C₁-C₄-Halogenalkyl, C₃-C₆-Halogenalkenyl oder C₃-C₆-Halogenalkinyl;
   R¹ Wasserstoff, Cyano, C₁-C₄-Alkyl, C₁-C₄-Halogenalkyl, C₃-C₆-Cycloalkyl, C₁-C₄-Alkoxy;
   R² Phenyl, Phenylcarbonyl, Phenylsulfonyl, 5- oder 6-gliedriges Hetaryl, 5- oder 6-gliedriges Hetarylcarbonyl oder 5- oder 6-gliedriges Hetarylsulfonyl, wobei die Ringsysteme unsubstituiert oder substituiert sind durch ein bis drei Reste R^{a},
   C₁-C₁₀-Alkyl, C₃-C₆-Cycloalkyl, C₂-C₁₀-Alkenyl, C₂-C₁₀-Alkinyl, C₁-C₁₀-Alkylcarbonyl, C₂-C₁₀-Alkenylcarbonyl, C₃-C₁₀-Alkinylcarbonyl, C₁-C₁₀-Alkylsulfonyl, oder C(R')=NOR", wobei die Kohlenwasserstoffreste dieser Gruppen unsubstituiert oder substituiert sind durch einen bis drei Reste R^{c}:
   R^{c} Cyano, Nitro, Amino, Aminocarbonyl, Aminothiocarbonyl, Halogen, C₁-C₆-Alkyl, C₁-C₆-Halogenalkyl, C₁-C₆-Alkylsulfonyl, C₁-C₆-Alkylsulfoxyl, C₁-C₆-Alkoxy, C₁-C₆-Halogenalkoxy, C₁-C₆-Alkoxycarbonyl, C₁-C₆-Alkylthio, C₁-C₆-Alkylamino, Di-C₁-C₆-alkylamino, C₁-C₆-Alkylaminocarbonyl, Di-C₁-C₆-alkylaminocarbonyl, C₁-C₆-Alkylaminothiocarbonyl, Di-C₁-C₆-alkylaminothiocarbonyl, C₂-C₆-Alkenyl, C₂-C₆-Alkenyloxy, C₃-C₆-Cycloalkyl, C₃-C₆-Cycloalkyloxy, 5- oder 6-gliedriges Heterocyclyl, 5- oder 6-gliedriges Heterocyclyloxy, Benzyl, Benzyloxy, Phenyl, Phenoxy, Phenylthio, 5- oder 6-gliedriges Hetaryl, 5- oder 6-gliedriges Hetaryloxy und Hetarylthio, wobei die cyclischen Gruppen ihrerseits partiell oder vollständig halogeniert sein können oder einen bis drei Reste R^{a} tragen können; und
   R³ Wasserstoff, C₁-C₆-Alkyl, C₂-C₆-Alkenyl oder C₂-C₆-Alkinyl bedeuten, wobei die Kohlenwasserstoffreste dieser Gruppen unsubstituiert oder durch einen bis drei Reste R^{c} substituiert sind;
   und
b) ein Glyphosatederivat
in einer synergistisch wirksamen Menge, behandelt.

Aus der Literatur ist bereits bekannt, daß Wirkstoffe der allgemeinen Formel I, die gemeinhin als Strobilurine bezeichnet werden, über ihre fungizide Wirkung hinaus eine Ertragssteigerung bei Kulturpflanzen hervorrufen können (Koehle H. et al. in Gesunde Pflanzen 49 (1997), Seite 267 -271; Glaab J. et al. Planta 207 (1999), 442-448).

Weiterhin ist aus WO-A 97/36488 bekannt, daß die Anwendung von Glyphosatederivaten bei gegenüber Glyphosate toleranten Pflanzen ausgewählt aus der Gruppe: Zuckerrübe, Futterrübe, Mais, Raps und Baumwolle zu einer Ertragssteigerung führen kann. Ferner ist aus US-A 3 988 142 bekannt, dass die sub-lethale Anwendung von Glyphosate in Pflanzen wie Zuckerrohr die Stärke- und Zuckerproduktion und damit den Gesamtertrag der Pflanze erhöht.

Überraschenderweise wurde nun gefunden, dass bei der Anwendung von Glyphosate und Strobilurinen wie insbesondere dem Pyraclostrobin bei Leguminosen ein synergistischer Effekt erzielt wird. Das heißt die rechnerisch rein additive ertragssteigernde Wirkung des Strobilurins und diejenige des Glyphosatederivats wird durch Anwendung der erfindungsgemäßen Mischung übertoffen. Der synergistische Effekt ist hier mehr als überraschend, kann man normalerweise bei einem Fungizid und einem Herbizid von völlig unterschiedlichen Wirkmechanismen ausgehen.

Demgemäß wurde das eingangs definierte Verfahren gefunden. Die verwendeten Wirkstoffe der Formel I sind als Fungizide und zum Teil auch als Insektizide bekannt (EP-A 253 213; WO-A 95/18789; WO-A 95/24396; WO-A 96/01256; WO-A 97/15552). Einen Hinweis auf eine mögliche Wirkung dieser Wirkstoffe in Kombination mit Glyphosatederivaten zur Ertragssteigerung bei Leguminosen gab es jedoch bisher nicht.

Die gute Pflanzenverträglichkeit der Wirkstoffe der Formel I in den zur Bekämpfung von Pflanzenkrankheiten notwendigen Konzentrationen erlaubt eine Behandlung von oberirdischen Pflanzenteilen.

In dem erfindungsgemäßen Verfahren wird der Wirkstoff I bevorzugt durch die Blätter aufgenommen und im Pflanzensaft in der ganzen Pflanze verteilt.

Bei einer bevorzugten Ausführungsform des Verfahrens werden die oberirdischen Pflanzenteile von genetisch veränderten Leguminosen mit einer erfindungsgemäßen Mischung enthaltend a) ein Strobilurinderivat I und b) ein Glyphosatederivat behandelt. Durch Anwendung von Glyphosate wird die Konkurrenz der Kulturpflanze mit den Unkrautpflanzen um Nährstoffe und Licht verringert und damit der Ertrag der Kulturpflanze erhöht. Besonders bevorzugt wird die erfindungsgemäße Mischung im oberirdischen Teil der Pflanze angewendet.

Verfahren zur Herstellung von Pflanzen, die gegenüber der Einwirkung von Glyphosate resistent sind, sind in der jüngeren Literatur beschrieben (EP-A 218 571, EP-A 293 358, WO-A 92/00377 and WO-A 92/04449). In Chemical Abstracts, 123, No.21 (1995) A.N. 281158c ist die Herstellung Glyphosate resistenter Sojapflanzen beschrieben. Andere Glyphosate resistente Leguminosen können auf ähnliche Weise hergestellt werden. Methoden zur Transformation von Leguminosen sind in der Literatur bekannt und können wie weiter oben dargestellt dazu verwendet werden beispielsweise Glyphosate resistente Bohnen, Erbsen, Linsen, Erdnüsse und Lupinien herzustellen: Plant Science (Shannon) 150(1) Jan.14.2000, 41-49; J. of Plant Biochemistry & Biotechnology 9(2) July, 2000, 107-110; Acta Physiologiae Plantarum 22(2), 2000, 111-119; Molecular Breeding 5(1) 1999, 43-51; In Vitro Cellular & Developmental Biology, Animal 34 (3 Part 2) March, 1998, 53A; Plant Cell Reports 16(8), 1997, 513-519 and 541-544; *Theoretical & Applied* Genetics 94(2), 1997, 151-158; Plant Science, 117 (1-2), 1996, 131-138; Plant Cell Reports 16(1-2), 1996, 32-37.

Beispielsweise können Sojasorten wie NIDERA AX 4919®, die resistent gegen zahlreiche Pilzkrankheiten und das Herbizid Glyphosate sind, verwendet werden.

Die Herstellung der in dem erfindungsgemäßen Verfahren verwendeten Wirkstoffe ist aus den eingangs zitierten Schriften bekannt.

Für das erfindungsgemäße Verfahren werden Wirkstoffe mit den folgenden Bedeutungen der Substituenten, und zwar jeweils für sich allein oder in Kombination, besonders bevorzugt:

Für das erfindungsgemäße Verfahren werden insbesondere die Wirkstoffe der Formeln Ia bis Ig besonders bevorzugt, in denen V OCH₃ oder NHCH₃ und Y CH oder N bedeuten.

Bevorzugte Wirkstoffe der Formel I, in denen Q für C(=N-OCH₃)-COOCH₃ steht, sind die in den Schriften EP-A 253 213 und EP-A 254 426 beschriebenen Verbindungen.

Bevorzugte Wirkstoffe der Formel I, in denen Q für C(=_{N}-OCH₃)-CONHCH₃ steht, sind die in den Schriften EP-A 398 692, EP-A 477 631 und EP-A 628 540 beschriebenen Verbindungen.

Bevorzugte Wirkstoffe der Formel I, in denen Q für N(-OCH₃)-COOCH₃ steht, sind die in den Schriften WO-A 93/15046 und WO-A 96/01256 beschriebenen Verbindungen.

Bevorzugte Wirkstoffe der Formel I, in denen Q für C(=CH-OCH₃)-COOCH₃ steht, sind die in den Schriften EP-A 178 826 und EP-A 278 595 beschriebenen Verbindungen.

Bevorzugte Wirkstoffe der Formel I, in denen Q für C(=CH-CH₃)-COOCH₃ steht, sind die in den Schriften EP-A 280 185 und EP-A 350 691 beschriebenen Verbindungen.

Bevorzugte Wirkstoffe der Formel I, in denen A für -CH₂O-N=C(R¹)-B steht, sind die in den Schriften EP-A 460 575 und EP-A 463 488 beschriebenen Verbindungen.

Bevorzugte Wirkstoffe der Formel I, in denen A für -O-B steht, sind die in den Schriften EP-A 382 375 und EP-A 398 692 beschriebenen Verbindungen.

Bevorzugte Wirkstoffe der Formel I, in denen A für -CH₂O-N=C(R¹)-C(R²)=N-OR³ steht, sind die in den Schriften WO-A 95/18789, WO-A 95/21153, WO-A 95/21154, WO-A 97/05103, WO-A 97/06133 und WO-A 97/15552 beschriebenen Verbindungen.

Besonders bevorzugt werden Wirkstoffe der Formel I, in denen
- Q: für C(=N-OCH₃)-COOCH₃ oder C(=N-OCH₃)-CONHCH₃;
- A: für CH₂-O- und
- B: für -N=C(R¹)-C(R²)=N-OR³ steht, wobei
- R¹: Wasserstoff, Cyano, Cyclopropyl, C₁-C₄-Alkyl oder C₁-C₂-Halogenalkyl, insbesondere Methyl, Ethyl, 1-Methylethyl oder Trifluormethyl und
- R²: C₁-C₄-Alkyl, C₂-C₅-Alkenyl, durch ein oder zwei Halogenatome substituiertes Phenyl oder C(R')=NOR", wobei R' eine der vorstehend bei R¹ genannten Gruppen und R" Wasserstoff, Cyclopropyl, C₁-C₄-Alkyl bedeuten, insbesondere Methyl, Ethyl oder iso-Propyl, und
- R³: eine der bei R" genannten Gruppen bedeutet;
diese Wirkstoffe werden durch die Formel Ib beschrieben, 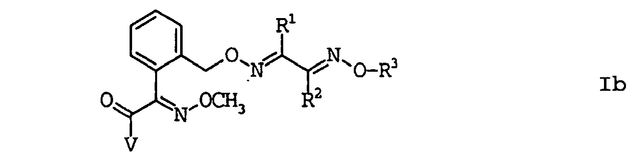 in der die Variablen die vorstehend genannten Bedeutungen haben.

Insbesondere werden Wirkstoffe der Formel Ib' bevorzugt. 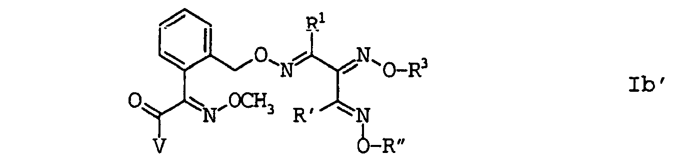 in der die Variablen die vorstehend genannten Bedeutungen haben.

Daneben werden auch Verbindungen der Formel Ia beonders bevorzugt, in der T für CH oder N und R^{a}' und R^{b} Halogen oder C₁-C₄-Alkyl bedeuten und x für 0, 1 oder 2 und y für 0 oder 1 stehen.

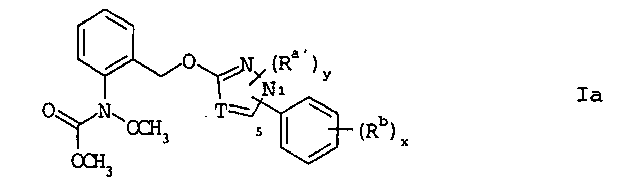

Im Hinblick auf ihre Verwendung zur Steigerung des Ertrags sind die in den folgenden Tabellen zusammengestellten Wirkstoffe besonders bevorzugt.

**Tabelle I**

| | | | | | |
|---|---|---|---|---|---|
| 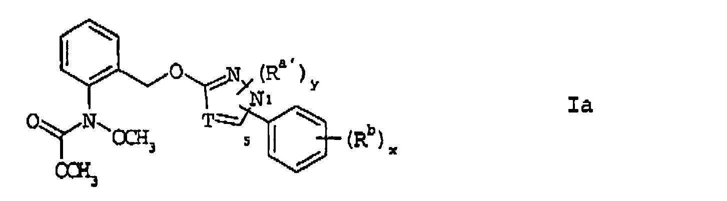 | | | | | |

| **Nr.** | **T** | **(R^{a'})_{y}** | **Position der Gruppe Phenyl-(R^{b})ₓ** | **(R^{b})ₓ** | **Literatur** |
|---|---|---|---|---|---|
| Ia-1 | N | - | 1 | 2,4-Cl₂ | WO-A 96/01256 |
| Ia-2 | N | - | 1 | 4-Cl | WO-A 96/01256 |
| Ia-3 | CH | - | 1 | 2-Cl | WO-A 96/01256 |
| Ia-4 | CH | - | 1 | 3-Cl | WO-A 96/01256 |
| Ia-5 | CH | - | 1 | 4-Cl | WO-A 96/01256 |
| Ia-6 | CH | - | 1 | 4-CH₃ | WO-A 96/01256 |
| Ia-7 | CH | - | 1 | H | WO-A 96/01256 |
| Ia-8 | CH | - | 1 | 3-CH₃ | WO-A 96/01256 |
| Ia-9 | CH | 5-CH₃ | 1 | 3-CF₃ | WO-A 96/01256 |
| Ia-10 | CH | 1-CH₃ | 5 | 3-CF₃ | WO-A 99/33812 |
| Ia-11 | CH | 1-CH₃ | 5 | 4-Cl | WO-A 99/33812 |
| Ia-12 | CH | 1-CH₃ | 5 | - | WO-A 99/33812 |

Insbesondere bevorzugt ist der Wirkstoff Ia-5 (common name: Pyraclostrolin).

**Tabelle II**

| | | | | | |
|---|---|---|---|---|---|
| 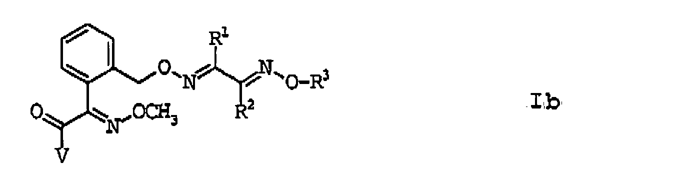 | | | | | |

| **Nr.** | **V** | **R¹** | **R²** | **R³** | **Literatur** |
|---|---|---|---|---|---|
| Ib-1 | OCH₃ | CH₃ | CH₃ | CH₃ | WO-A 95/18789 |
| Ib-2 | OCH₃ | CH₃ | CH(CH₃)₂ | CH₃ | WO-A 95/18789 |
| Ib-3 | OCH₃ | CH₃ | CH₂CH₃ | CH₃ | WO-A 95/18789 |
| Ib-4 | NHCH₃ | CH₃ | CH₃ | CH₃ | WO-A 95/18789 |
| Ib-5 | NHCH₃ | CH₃ | 4-F-C₆H₄ | CH₃ | WO-A 95/18789 |
| Ib-6 | NHCH₃ | CH₃ | 4-Cl-C₆H₄ | CH₃ | WO-A 95/18789 |
| Ib-7 | NHCH₃ | CH₃ | 2, 4-C₆H₃ | CH₃ | WO-A 95/18789 |
| Ib-8 | NHCH₃ | Cl | 4-F-C₆H₄ | CH₃ | WO-A 98/38857 |
| Ib-9 | NHCH₃ | Cl | 4-Cl-C₆H₄ | CH₂CH₃ | WO-A 98/38857 |
| Ib-10 | NHCH₃ | CH₃ | CH₂C(=CH₂)CH₃ | CH₃ | WO-A 97/05103 |
| Ib-11 | NHCH₃ | CH₃ | CH=C(CH₃)₂ | CH₃ | WO-A 97/05103 |
| Ib-12 | NHCH₃ | CH₃ | CH=C(CH₃)₂ | CH₂CH₃ | WO-A 97/05103 |
| Ib-13 | NHCH₃ | CH₃ | CH=C(CH₃)CH₂CH₃ | CH₃ | WO-A 97/05103 |
| Ib-14 | NHCH₃ | CH₃ | O-CH(CH₃)₂ | CH₃ | WO-A 97/06133 |
| Ib-15 | NHCH₃ | CH₃ | O-CH₂CH(CH₃)₂ | CH₃ | WO-A 97/06133 |
| Ib-16 | NHCH₃ | CH₃ | C(CH₃)=NOCH₃ | CH₃ | WO-A 97/15552 |
| Ib-17 | NHCH₃ | CH₃ | C(CH₃)=NOCH₂CH₃ | CH₂CH₃ | WO-A 97/15552 |
| Ib-18 | NHCH₃ | CH₃ | C(CH₃)=NOCH(CH₃)₂ | CH(CH₃)₂ | WO-A 97/15552 |
| Ib-19 | NHCH₃ | CH₃ | C(CH₃)=NO(c-C₃H₅) | c-C₃H₅ | WO-A 97/15552 |
| Ib-20 | NHCH₃ | CH₃ | C(CH₃)=NOCH₂CH=CH₂ | CH₂CH=CH₂ | WO-A 97/15552 |
| Ib-21 | NHCH₃ | CF₃ | C(CF₃)=NOCH₃ | CH₃ | WO-A 97/15552 |
| Ib-22 | NHCH₃ | CF₃ | C(CF₃)=NOCH₂CH₃ | CH₂CH₃ | WO-A 97/15552 |
| Ib-23 | NHCH₃ | CF₃ | C(CF₃)=NOCH(CH₃)₂ | CH(CH₃)₂ | WO-A 97/15552 |
| Ib-24 | NHCH₃ | CF₃ | C (CF₃)=NO(c-C₃H₅) | c-C₃H₅ | WO-A 97/15552 |
| Ib-25 | NHCH₃ | CF₃ | C(CF₃)=NOCH₂CH=CH₂ | CH₂CH=CH₂ | WO-A 97/15552 |
| Ib-26 | OCH₃ | CH₃ | C(CH₃)=NOCH₃ | CH₃ | WO-A 97/15552 |
| Ib-27 | OCH₃ | CH₃ | C(CH₃)=NOCH₂CH₃ | CH₂CH₃ | WO-A 97/15552 |
| Ib-28 | OCH₃ | CH₃ | C(CH₃)=NOCH(CH₃)₂ | CH(CH₃)₂ | WO-A 97/15552 |
| Ib-29 | OCH₃ | CH₃ | C(CH₃)=NO(c-C₃H₅) | c-C₃H₅ | WO-A 97/15552 |
| Ib-30 | OCH₃ | CH₃ | C(CH₃)=NOCH₂CH=CH₂ | CH₂CH=CH₂ | WO-A 97/15552 |
| Ib-31 | OCH₃ | CF₃ | C(CF₃)=NOCH₃ | CH₃ | WO-A 97/15552 |
| Ib-32 | OCH₃ | CF₃ | C(CF₃)=NOCH₂CH₃ | CH₂CH₃ | WO-A 97/15552 |
| Ib-33 | OCH₃ | CF₃ | C(CF₃)=NOCH(CH₃)₂ | CH(CH₃)₂ | WO-A 97/15552 |
| Ib-34 | OCH₃ | CF₃ | C(CF₃)=NO(c-C₃H₅) | c-C₃H₅ | WO-A 97/15552 |
| Ib-35 | OCH₃ | CF₃ | C(CF₃)=NOCH₂CH=CH₂ | CH₂CH=CH₂ | WO-A 97/15552 |

**Tabelle III**

| | | | | | |
|---|---|---|---|---|---|
| 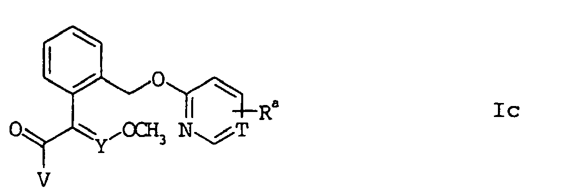 | | | | | |

| **Nr.** | **V** | **Y** | **T** | **R^{a}** | **Literatur** |
|---|---|---|---|---|---|
| Ic-1 | OCH₃ | CH | N | 2-OCH₃, 6-CF₃ | WO-A 96/16047 |
| Ic-2 | OCH₃ | CH | N | 2-OCH(CH₃)₂, 6-CF₃ | WO-A 96/16047 |
| Ic-3 | OCH₃ | CH | CH | 5-CF₃ | EP-A 278 595 |
| Ic-4 | OCH₃ | CH | CH | 6-CF₃ | EP-A 278 595 |
| Ic-5 | NHCH₃ | N | CH | 3-Cl | EP-A 398 692 |
| Ic-6 | NHCH₃ | N | CH | 3-CF₃ | EP-A 398 692 |
| Ic-7 | NHCH₃ | N | CH | 3-CF₃, 5-Cl | EP-A 398 692 |
| Ic-8 | NHCH₃ | N | CH | 3-Cl, 5-CF₃ | EP-A 398 692 |

**Tabelle IV**

| | | | | | |
|---|---|---|---|---|---|
| 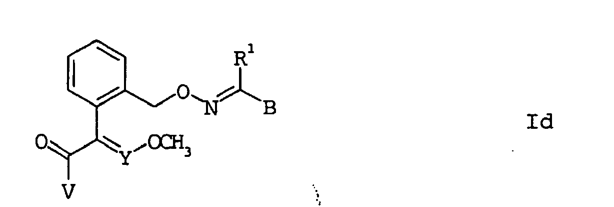 | | | | | |

| **Nr.** | **V** | **Y** | **R¹** | **B** | **Literatur** |
|---|---|---|---|---|---|
| Id-1 | OCH₃ | CH | CH₃ | (3-CF₃) C₆H₄ | EP-A 370 629 |
| Id-2 | OCH₃ | CH | CH₃ | (3,5-Cl₂)C₆H₃ | EP-A 370 629 |
| Id-3 | NHCH₃ | N | CH₃ | (3-CF₃) C₆H₄ | WO-A 92/13830 |
| Id-4 | NHCH₃ | N | CH₃ | (3-OCF₃) C₆H₄ | WO-A 92/13830 |
| Id-5 | OCH₃ | N | CH₃ | (3-OCF₃)C₆H₄ | EP-A 460 575 |
| Id-6 | OCH₃ | N | CH₃ | (3-CF₃) C₆H₄ | EP-A 460 575 |
| Id-7 | OCH₃ | N | CH₃ | (3, 4-Cl₂) C₆H₃ | EP-A 460 575 |
| Id-8 | OCH₃ | N | CH₃ | (3,5-Cl₂) C₆H₃ | EP-A 463 488 |

**Tabelle V**

| | | | | |
|---|---|---|---|---|
| 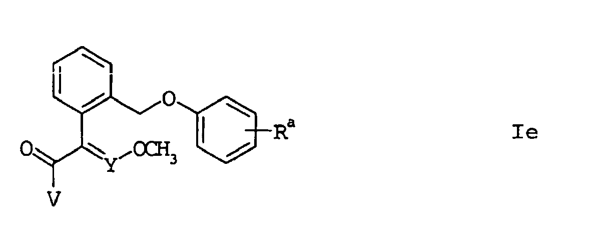 | | | | |

| **Nr.** | **V** | **Y** | **R^{a}** | **Literatur** |
|---|---|---|---|---|
| Ie-1 | OCH₃ | N | 2-CH₃ | EP-A 253 213 |
| Ie-2 | OCH₃ | N | 2,5-(CH₃)₂ | EP-A 253 213 |
| Ie-3 | NHCH₃ | N | 2,5-(CH₃)₂ | EP-A 477 631 |
| Ie-4 | NHCH₃ | N | 2-Cl | EP-A 477 631 |
| Ie-5 | NHCH₃ | N | 2-CH₃ | EP-A 477 631 |
| Ie-6 | NHCH₃ | N | 2-CH₃, 4-OCF₃ | EP-A 628 540 |
| Ie-7 | NHCH₃ | N | 2-Cl, 4-OCF₃ | EP-A 628 540 |
| Ie-8 | NHCH₃ | N | 2-CH₃, 4-OCH(CH₃)-C(CH₃)=NOCH₃ | EP-A 11 18 609 |
| Ie-9 | NHCH₃ | N | 2-Cl, 4-OCH(CH₃)-C(CH₃)=NOCH₃ | EP-A 11 18 609 |
| Ie-10 | NHCH₃ | N | 2-CH₃,4-OCH(CH₃)-C(CH₂CH₃)=NOCH₃ | EP-A 11 18 609 |
| Ie-11 | NHCH₃ | N | 2-Cl,4-OCH(CH₃)-C(CH₃)=NOCH₂CH₃ | EP-A 11 18 609 |

**Tabelle VI**

| | | | | |
|---|---|---|---|---|
| 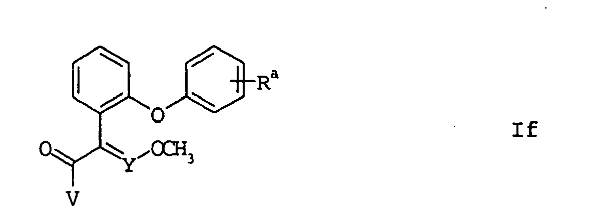 | | | | |

| **Nr.** | **V** | **Y** | **R^{a}** | **Literatur** |
|---|---|---|---|---|
| If-1 | NHCH₃ | N | H | EP-A 398 692 |
| If-2 | NHCH₃ | N | 3-CH₃ | EP-A 398 692 |
| If-3 | NHCH₃ | N | 2-NO₂ | EP-A 398 692 |
| If-4 | NHCH₃ | N | 4-NO₂ | EP-A 398 692 |
| If-5 | NHCH₃ | N | 4-Cl | EP-A 398 692 |
| If-6 | NHCH₃ | N | 4-Br | EP-A 398 692 |

**Tabelle VII**

| | | | | | |
|---|---|---|---|---|---|
| 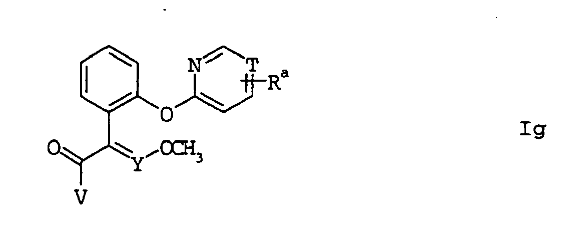 | | | | | |

| **Nr.** | **V** | **Y** | **T** | **R^{a}** | **Literatur** |
|---|---|---|---|---|---|
| Ig-1 | OCH₃ | CH | N | 6-O-(2-CN-C₆H₄) | EP-A 382 375 |
| Ig-2 | OCH₃ | CH | N | 6-O-(2-Cl-C₆H₄) | EP-A 382 375 |
| Ig-3 | OCH₃ | CH | N | 6-O-(2-CH₃-C₆H₄) | EP-A 382 375 |
| Ig-4 | NHCH₃ | N | N | 6-O-(2-Cl-C₆H₄) | GB-A 22 53 624 |
| Ig-5 | NHCH₃ | N | N | 6-O-(2,4-Cl₂-C₆H₃) | GB-A 22 53 624 |
| Ig-6 | NHCH₃ | N | N | 6-O-(2-CH₃-C₆H₄) | GB-A 22 53 624 |
| Ig-7 | NHCH₃ | N | N | 6-O-(2-CH₃,3-Cl-C₆H₃) | GB-A 22 53 624 |
| Ig-8 | NHCH₃ | N | N | 2-F, 6-O-(2-CH₃-C₆H₄) | WO-A 98/21189 |
| Ig-9 | NHCH₃ | N | N | 2-F, 6-O-(2-Cl-C₆H₄) | WO-A 98/21189 |
| Ig-10 | NHCH₃ | N | N | 2-F, 6-O-(2-CH₃, 3-Cl-C₆H₃) | WO-A 98/21189 |

Als fungizide Wirkstoffe können die Strobilurine I allein oder in Mischung mit anderen fungiziden Wirkstoffen - insbesondere aus der Klasse der Azole Iₓ - eingesetzt werden.

Für diesen Zweck geeignete Azolwirkstoffe sind:
- Fluquinconazol, Proc. Br. Crop Prot. Conf.-Pests Dis., 5-3,411 (1992);
- Metconazol, Proc. Br. Crop Prot. Conf.-Pests Dis., 5-4,419 (1992);
- Prochloraz, US-A 3,991,071;
- Propiconazol, GB-A 1,522,657;
- Prothioconazol, WO-A 96/016048;
- Tebuconazol , US-A 4,723,984;
- Epoxiconazol, EP-A 196038;
- Myclobutanil, CAS RN [88671-89-0];

Insbesondere geeignete Azole sind: Metconazol, Myclobutanil, Epoxiconazol, Propiconazol, Prothioconazol oder Tebuconazol.

Werden Fungizidmischungen von beispielsweise Strobilurinen I und Azolen Iₓ eingesetzt, so werden diese in der Regel in einem Gewichtsverhältnis I zu Iₓ von 20:1 bis 0,05:1 und vorzugsweise 10:1 bis 0,1:1 eingesetzt.

Unter Glyphosatederivaten II sind im wesentlichen die im *Pesticide Manual* aufgeführten folgenden Verbindungen zu verstehen: Glyphosate kann beispielsweise als freie Säure oder in Form von Salzen wie dem Isopropylammonium-, dem Natrium, dem Ammonium- oder Trimesium (trimethylsulfenium)-Salz eingesetzt werden. Es können auch Mischungen der Salze zum Einsatz gelangen. Desweiteren zählt die Verbindung N-(phosphonomethyl)glycine zu den Glyphosatederivaten II. Die Herstellung der Glyphosatederivate II kann der in Pesticide Manual (12.th Edition) zitierten Literatur entnommen werden.

Die Verbindungen I erhöhen in Kombination mit Glyphosatederivaten die Ertragskraft bei Leguminosen. Besondere Bedeutung haben sie für die Behandlung verschiedener gegen Glyphosate resistente Kulturpflanzen wie Erbsen, Bohnen, Linsen, Erdnüsse, Lupinien und insbesondere Soja. Der synergistische Effekt zeigt sich unabhängig von der Herstellung der Glyphosate resistenten Leguminosen.

Speziell eignen sie sich zur Bekämpfung folgender Schadbilder:
- Welkerscheinungen trotz ausreichendem Nährstoffangebot.
- Verfärbungen des grünen Blattgewebes wie z. B. Ausbleichen von Soja.

Die Verbindungen I werden angewendet, indem man die zu schützenden Pflanzen mit einer wirksamen Menge der Wirkstoffe behandelt. Die Anwendung kann sowohl vor als auch nach der Applikation der Glyphosatederivate II auf die Pflanzen erfolgen.

In einer bevorzugten Ausführungsform des Verfahrens erfolgt die Behandlung der Pflanze gemeinsam mit der Applikation des Fungizid I und des Herbizids II. Der synergistische Effekt tritt in diesem Fall besonders deutlich zu Tage.

Die Aufwandmengen liegen bei der Anwendung eines Wirkstoffs I je nach klimatischen Bedingungen und Art der Pflanze im Bereich von 0,01 bis 2,0 kg Wirkstoff pro ha.

Die Aufwandmengen liegen bei der Anwendung eines Glyphosatederivates II je nach klimatischen Bedingungen und Art der Pflanze im Bereich von 0,1 bis 6,0 kg Wirkstoff (Säureäquivalent) pro ha.

Das Fungizid I oder die fungizide Mischung I und Iₓ wird in der Regel in einem Gewichtsverhältnis zum Herbizid II von 5:1 bis 0,01:1 und vorzugsweise von 1:1 bis 0,1:1 eingesetzt.

Die Verbindungen I und die Glyphosatederivate II können in die für Pflanzenschutzmittel üblichen Formulierungen überführt werden, z.B. Lösungen, Emulsionen, Suspensionen, Stäube, Pulver, Pasten und Granulate. Die Anwendungsform richtet sich nach dem jeweiligen Verwendungszweck; sie soll in jedem Fall eine feine und gleichmäßige Verteilung der erfindungsgemäßen Mischung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmittel als Hilfslösungsmittel verwendet werden können. Als Hilfsstoffe kommen im wesentlichen die auch bei Fungiziden Üblichen in Betracht.

Die Formulierungen enthalten im allgemeinen zwischen 0,01 und 95 Gew.-%, vorzugsweise zwischen 0,1 und 90 Gew.-% des Wirkstoffs. Die Wirkstoffe werden dabei in einer Reinheit von 90% bis 100%, vorzugsweise 95% bis 100% (nach NMR-Spektrum) eingesetzt.

Beispiele für Formulierungen sind aus den eingangs zitierten Schriften bekannt.

Wäßrige Anwendungsformen können üblicherweise aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Ö1 oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Herbizide, andere Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:10 bis 10:1 zugemischt werden.

Die Wirkstoffe I werden vorzugsweise gemeinsam oder getrennt mit dem Glyphosate II auf die Pflanze aufgebracht.

Im allgemeinen werden die Verbindungen I und II in einem Zeitraum von 3 Wochen bis 3 Monaten und vorzugsweise innerhalb von 1 bis 2 Monaten nach der Aussaat der Leguminosensamen aufgebracht. Es kann von Vorteil sein die Fungizid- bzw. Herbizidanwendung mehrfach, vorzugsweise zweifach durchzuführen.

Bei einer getrennten Anwendung kann es von Vorteil sein beispielsweise 3-6 Wochen nach der Aussaat der Leguminosensamen das Herbizid II auszubringen und dann in einer zweiten Anwendung 4-8 Wochen nach Aussaat entweder das Fungizid I alleine oder eine Mischung von Fungizid I und Herbizid II auszubringen.

Bei gemeinsamer Anwendung erfolgt die Ausbringung einer Mischung der Verbindungen I und II in der Regel ein- bis zweimal in einem Zeitraum von 1 bis 3 Monaten nach Aussaat der Leguminosensamen.

Die oben ausgeführten Ausbringungsmethoden sind als Blattbehandlung der Leguminosen zu verstehen. Diese Methoden zeigen im Vergleich zu beispielsweise einer Saatgutbehandlung deutliche Vorteile.

In den Anwendungsbeispielen wird die Ertragssteigerung durch den Einsatz von Pyraclostrobin und Glyphosate in Sojaplantagen deutlich.

Hinzuzufügen ist, dass die Ertragssteigerung nicht mit einer erfolgreichen Bekämpfung von Schadpilzen im Zusammenhang steht. Die Versuchsfelder wiesen bei den Versuchen keinen Krankheitsbefall auf. Es versteht sich von selbst, dass in einem solchen Fall, die Ertragssteigerung noch deutlicher ausfallen würde, da die fungiziden Wirkstoffe I (Strobilurine) und Iₓ (Azole) oder deren Mischungen äußerst effiziente Fungizide darstellen. Ernteausfällen, die durch Schadpilze verursacht werden, kann mit den erfindungsgemäßen Verfahren wirkungsvoll entgegengewirkt werden.

Der Hinweis auf die erfindungsgemäße Anwendung der Wirkstoffe I kann als Verpackungsaufdruck oder in Produktdatenblättern erfolgen. Der Hinweis kann auch bei Präparaten erfolgen, die mit den Wirkstoffen I in Kombination angewendet werden können.

### Anwendungsbeispiele für die Ertragssteigerung bei Leguminosen

### Anwendungsbeispiele

Die unten aufgeführten Ergebnisse stammen aus Freiland-Versuchen, die während der Wintersaison in den nördlichen Pampas von Argentinien durchgeführt wurden. Es wurde mit Parzellen gearbeitet, die relativ zueinander nach dem Zufallsprinzip angelegt wurden. Jede Behandlungsvariante wurde vierfach wiederholt. Als Kulturpflanze wurde die Sojasorte NIDERA AX 4910 benutzt, die gegen zahlreiche Pilzkrankheiten und gegen das Herbizid Glyphosate resistent ist.

In allen 5 Versuchen wurden mit praxisüblichen Geräten 2 Blattbehandlungen mit Glyphosate durchgeführt jeweils 30 bzw. 60 Tage nach Aussaat der Sojasamen. In den Versuchen 2 und 3 wurde zum Termin "30 Tage nach der Aussaat" Pyraclostrobin zugesetzt, während in den Versuchen 4 und 5 der Zusatz von Pyraclostrobin zum Termin "60 Tage nach der Aussaat" erfolgte. Wie die Ergebnisse zeigen konnte durch den Zusatz von Pyraclostrobin in Mengen von 50 oder 100 g A.S./ha sowohl zum frühen wie auch zum späten Behandlungstermin der Ertrag gegenüber der bisher üblichen, alleinigen Anwendung von Glyphosate deutlich gesteigert.

| Versuchs-Nummer | Behandlung 30 Tage nach Aussaat | A.S. g/ha | Behandlung 60 Tage nach Aussaat | A.S. g/ha | Ertrag |
|---|---|---|---|---|---|
| | | | | | |
| 1 | Glyphosate | 360 | Glyphosate | 360 | 100 % |
| 2 | Glyphosate | 360 | Glyphosate | 360 | 116 % |
| | Pyraclostrobin | 50 | | | |
| 3 | Glyphosate | 360 | Glyphosate | 360 | 129 % |
| | Pyraclostrobin | 100 | | | |
| 4 | Glyphosate | 360 | Glyphosate | 360 | 122 % |
| | | | Pyraclostrobin | 50 | |
| 5 | Glyphosate | 360 | Glyphosate | 360 | 135 % |
| | | | Pyraclostrobin | 100 | |

| | | | | | |
|---|---|---|---|---|---|
| A.S. = Aktiv-Substanz | | | | | |

## Patentansprüche

1. Verfahren zur Ertragssteigerung bei gegenüber Glyphosate resistenten Leguminosen, welches **dadurch gekennzeichnet ist, daß** man die Pflanzen mit einer Mischung enthaltend
a) eine Verbindung der Formel I 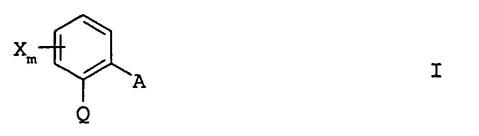 worin
X Halogen, C₁-C₄-Alkyl oder Trifluormethyl;
m 0 oder 1;
Q C(=CH-CH₃)-COOCH₃, C(=CH-OCH₃)-COOCH₃,
C(=N-OCH₃)-CONHCH₃, C(=N-OCH₃)-COOCH₃ oder
N(-OCH₃)-COOCH₃;
A -O-B, -CH₂O-B, -OCH₂-B, -CH=CH-B, -C=C-B, -CH₂O-N=C(R¹)-B oder -CH₂O-N=C(R¹)-C(R²)=N-OR³, wobei
B Phenyl, Naphthyl, 5-gliedriges oder 6-gliedriges Het-aryl oder 5-gliedriges oder 6-gliedriges Heterocyclyl, enthaltend ein bis drei N-Atome und/oder ein O- oder S-Atom oder ein oder zwei O- und/oder S-Atome bedeutet, wobei die Ringsysteme unsubstituiert oder substituiert sind durch einen bis drei Reste R^{a}:
R^{a} Cyano, Nitro, Amino, Aminocarbonyl, Aminothiocarbonyl, Halogen, C₁-C₆-Alkyl, C₁-C₆-Halogenalkyl, C₁-C₆-Alkylcarbonyl, C₁-C₆-Alkylsulfonyl, C₁-C₆-Alkylsulfoxyl, C₃-C₆-Cycloalkyl, C₁-C₆-Alkoxy, C₁-C₆-Halogenalkoxy, C₁-C₆-Alkyloxycarbonyl, C₁-C₆-Alkylthio, C₁-C₆-Alkylamino, Di-C₁-C₆-Alkylamino, C₁-C₆-Alkylaminocarbonyl, Di-C₁-C₆-Alkylaminocarbonyl, C₁-C₆-Alkylaminothiocarbonyl, Di-C₁-C₆-Alkylaminothiocarbonyl, C₂-C₆-Alkenyl, C₂-C₆-Alkenyloxy, Phenyl, Phenoxy, Benzyl, Benzyloxy, 5- oder 6-gliedriges Heterocyclyl, 5- oder 6-gliedriges Hetaryl, 5- oder 6-gliedriges Hetaryloxy, C(=NOR')-OR" oder OC(R')₂-C(R")=NOR",
wobei die cyclischen Reste ihrerseits unsubstituiert oder substituiert sind durch einen bis drei Reste R^{b}:
R^{b} Cyano, Nitro, Halogen, Amino, Aminocarbonyl, Aminothiocarbonyl, C₁-C₆-Alkyl, C₁-C₆-Halogenalkyl, C₁-C₆-Alkylsulfonyl, C₁-C₆-Alkylsulfoxyl, C₃-C₆-Cycloalkyl, C₁-C₆-Alkoxy, C₁-C₆-Halogenalkoxy, C₁-C₆-Alkoxycarbonyl, C₁-C₆-Alkylthio, C₁-C₆-Alkylamino, Di-C₁-C₆-alkylamino, C₁-C₆-Alkylaminocarbonyl, Di-C₁-C₆-alkylaminocarbonyl, C₁-C₆-Alkylaminothiocarbonyl, Di-C₁-C₆-alkylaminothiocarbonyl, C₂-C₆-Alkenyl, C₂-C₆-Alkenyloxy, C₃-C₆-Cycloalkyl, C₃-C₆-Cycloalkenyl, Phenyl, Phenoxy, Phenylthio, Benzyl, Benzyloxy, 5- oder 6-gliedriges Heterocyclyl, 5- oder 6-gliedriges Hetaryl, 5- oder 6-gliedriges Hetaryloxy oder C(=NOR')-OR";
R' Wasserstoff, Cyano, C₁-C₆-Alkyl, C₃-C₆-Cycloalkyl oder C₁-C₄-Halogenalkyl;
R" Wasserstoff, C₁-C₆-Alkyl, C₃-C₆-Alkenyl, C₃-C₆-Alkinyl, C₁-C₄-Halogenalkyl, C₃-C₆-Halogenalkenyl oder C₃-C₆-Halogenalkinyl;
R¹ Wasserstoff, Cyano, C₁-C₄-Alkyl, C₁-C₄-Halogenalkyl, C₃-C₆-Cycloalkyl, C₁-C₄-Alkoxy;
R² Phenyl, Phenylcarbonyl, Phenylsulfonyl, 5- oder 6-gliedriges Hetaryl, 5- oder 6-gliedriges Hetarylcarbonyl oder 5- oder 6-gliedriges Hetarylsulfonyl, wobei die Ringsysteme unsubstituiert oder substituiert sind durch ein bis drei Reste R^{a},
C₁-C₁₀-Alkyl, C₃-C₆-Cycloalkyl, C₂-C₁₀-Alkenyl, C₂-C₁₀-Alkinyl, C₁-C₁₀-Alkylcarbonyl, C₂-C₁₀-Alkenylcarbonyl, C₃-C₁₀-Alkinylcarbonyl, C₁-C₁₀-Alkylsulfonyl, oder C(R')=NOR", wobei die Kohlenwasserstoffreste dieser Gruppen unsubstituiert oder substituiert sind durch einen bis drei Reste R^{c}:
R^{c} Cyano, Nitro, Amino, Aminocarbonyl, Aminothiocarbonyl, Halogen, C₁-C₆-Alkyl, C₁-C₆-Halogenalkyl, C₁-C₆-Alkylsulfonyl, C₁-C₆-Alkylsulfoxyl, C₁-C₆-Alkoxy, C₁-C₆-Halogenalkoxy, C₁-C₆-Alkoxycarbonyl, C₁-C₆-Alkylthio, C₁-C₆-Alkylamino, Di-C₁-C₆-alkylamino, C₁-C₆-Alkylaminocarbonyl, Di-C₁-C₆-alkylaminocarbonyl, C₁-C₆-Alkylaminothiocarbonyl, Di-C₁-C₆-alkylaminothiocarbonyl, C₂-C₆-Alkenyl, C₂-C₆-Alkenyloxy, C₃-C₆-Cycloalkyl, C₃-C₆-Cycloalkyloxy, 5- oder 6-gliedriges Heterocyclyl, 5- oder 6-gliedriges Heterocyclyloxy, Benzyl, Benzyloxy, Phenyl, Phenoxy, Phenylthio, 5- oder 6-gliedriges Hetaryl, 5- oder 6-gliedriges Hetaryloxy und Hetarylthio, wobei die cyclischen Gruppen ihrerseits partiell oder vollständig halogeniert sein können oder einen bis drei Reste R^{a} tragen können; und
R³ Wasserstoff, C₁-C₆-Alkyl, C₂-C₆-Alkenyl oder C₂-C₆-Alkinyl bedeuten, wobei die Kohlenwasser-stoffreste dieser Gruppen unsubstituiert oder durch einen bis drei Reste R^{c} substituiert sind;
und
b) ein Glyphosatederivat II
in einer synergistisch wirksamen Menge, behandelt.

2. Verfahren nach Anspruch 1, wobei als Komponente a) ein Wirkstoff der Formel Ia, 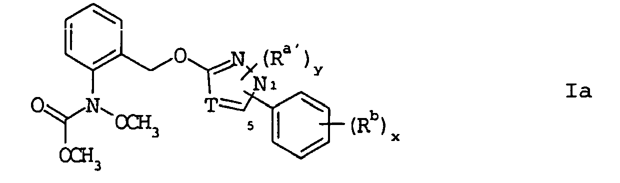 in der T für CH oder N und R^{a}' und R^{b} Halogen oder C₁-C₄-Alkyl bedeuten, die Phenylgruppe in 1- oder 5-Stellung steht und x für 0, 1 oder 2 und y für 0 oder 1 stehen, verwendet wird.

3. Verfahren nach einem der Ansprüche 1 oder 2, wobei als Komponente a) zusätzlich zu dem Wirkstoff der Formel I bzw. Ia ein fungizides Azol ausgewählt aus der Gruppe: Fluquinconazol, Metconazol, Prochloraz, Propiconazol, Prothioconazol, Tebuconazol, Epoxiconazol oder Myclobutanil eingesetzt wird.

4. Mischung enthaltend
a) eine Verbindung der Formel I 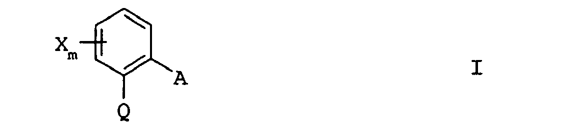 worin
X Halogen, C₁-C₄-Alkyl oder Trifluormethyl;
m 0 oder 1;
Q C(=CH-CH₃)-COOCH₃, C(=CH-OCH₃)-COOCH₃,
C(=N-OCH₃)-CONHCH₃, C(=N-OCH₃)-COOCH₃ oder
N(-OCH₃)-COOCH₃;
A -O-B, -CH₂O-B, -OCH₂-B, -CH=CH-B, -C≡C-B, -CH₂O-N=C(R¹)-B oder -CH₂O-N=C(R¹)-C(R²)=N-OR³, wobei
B Phenyl, Naphthyl, 5-gliedriges oder 6-gliedriges Het-aryl oder 5-gliedriges oder 6-gliedriges Heterocyclyl, enthaltend ein bis drei N-Atome und/oder ein O- oder S-Atom oder ein oder zwei O- und/oder S-Atome bedeutet, wobei die Ringsysteme unsubstituiert oder substituiert sind durch einen bis drei Reste R^{a}:
R^{a} Cyano, Nitro, Amino, Aminocarbonyl, Aminothiocarbonyl, Halogen, C₁-C₆-Alkyl, C₁-C₆-Halogenalkyl, C₁-C₆-Alkylcarbonyl, C₁-C₆-Alkylsulfonyl, C₁-C₆-Alkylsulfoxyl, C₃-C₆-Cycloalkyl, C₁-C₆-Alkoxy, C₁-C₆-Halogenalkoxy, C₁-C₆-Alkyloxycarbonyl, C₁-C₆-Alkylthio, C₁-C₆-Alkylamino, Di-C₁-C₆-Alkylamino, C₁-C₆-Alkylaminocarbonyl, Di-C₁-C₆-Alkylaminocarbonyl, C₁-C₆-Alkylaminothiocarbonyl, Di-C₁-C₆-Alkylaminothiocarbonyl, C₂-C₆-Alkenyl, C₂-C₆-Alkenyloxy, Phenyl, Phenoxy, Benzyl, Benzyloxy, 5- oder 6-gliedriges Heterocyclyl, 5- oder 6-gliedriges Hetaryl, 5- oder 6-gliedriges Hetaryloxy, C(=NOR')-OR" oder OC(R')₂-C(R")=NOR",
wobei die cyclischen Reste ihrerseits unsubstituiert oder substituiert sind durch einen bis drei Reste R^{b}:
R^{b} Cyano, Nitro, Halogen, Amino, Aminocarbonyl, Aminothiocarbonyl, C₁-C₆-Alkyl, C₁-C₆-Halogenalkyl, C₁-C₆-Alkylsulfonyl, C₁-C₆-Alkylsulfoxyl, C₃-C₆-Cycloalkyl, C₁-C₆-Alkoxy, C₁-C₆-Halogenalkoxy, C₁-C₆-Alkoxycarbonyl, C₁-C₆-Alkylthio, C₁-C₆-Alkylamino, Di-C₁-C₆-alkylamino, C₁-C₆-Alkylaminocarbonyl, Di-C₁-C₆-alkylaminocarbonyl, C₁-C₆-Alkylaminothiocarbonyl, Di-C₁-C₆-alkylaminothiocarbonyl, C₂-C₆-Alkenyl, C₂-C₆-Alkenyloxy, C₃-C₆-Cycloalkyl, C₃-C₆-Cycloalkenyl, Phenyl, Phenoxy, Phenylthio, Benzyl, Benzyloxy, 5- oder 6-gliedriges Heterocyclyl, 5- oder 6-gliedriges Hetaryl, 5- oder 6-gliedriges Hetaryloxy oder C(=NOR')-OR";
R' Wasserstoff, Cyano, C₁-C₆-Alkyl, C₃-C₆-Cycloalkyl oder C₁-C₄-Halogenalkyl;
R" Wasserstoff, C₁-C₆-Alkyl, C₃-C₆-Alkenyl, C₃-C₆-Alkinyl, C₁-C₄-Halogenalkyl, C₃-C₆-Halogenalkenyl oder C₃-C₆-Halogenalkinyl;
R¹ Wasserstoff, Cyano, C₁-C₄-Alkyl, C₁-C₄-Halogenalkyl, C₃-C₆-Cycloalkyl, C₁-C₄-Alkoxy;
R² Phenyl, Phenylcarbonyl, Phenylsulfonyl, 5- oder 6-gliedriges Hetaryl, 5- oder 6-gliedriges Hetarylcarbonyl oder 5- oder 6-gliedriges Hetarylsulfonyl, wobei die Ringsysteme unsubstituiert oder substituiert sind durch ein bis drei Reste R^{a},
C₁-C₁₀-Alkyl, C₃-C₆-Cycloalkyl, C₂-C₁₀-Alkenyl, C₂-C₁₀-Alkinyl, C₁-C₁₀-Alkylcarbonyl, C₂-C₁₀-Alkenylcarbonyl, C₃-C₁₀-Alkinylcarbonyl, C₁-C₁₀-Alkylsulfonyl, oder C(R')=NOR", wobei die Kohlenwasserstoffreste dieser Gruppen unsubstituiert oder substituiert sind durch einen bis drei Reste R^{c}:
R^{c} Cyano, Nitro, Amino, Aminocarbonyl, Aminothiocarbonyl, Halogen, C₁-C₆-Alkyl, C₁-C₆-Halogenalkyl, C₁-C₆-Alkylsulfonyl, C₁-C₆-Alkylsulfoxyl, C₁-C₆-Alkoxy, C₁-C₆-Halogenalkoxy, C₁-C₆-Alkoxycarbonyl, C₁-C₆-Alkylthio, C₁-C₆-Alkylamino, Di-C₁-C₆-alkylamino, C₁-C₆-Alkylaminocarbonyl, Di-C₁-C₆-alkylaminocarbonyl, C₁-C₆-Alkylaminothiocarbonyl, Di-C₁-C₆-alkylaminothiocarbonyl, C₂-C₆-Alkenyl, C₂-C₆-Alkenyloxy, C₃-C₆-Cycloalkyl, C₃-C₆-Cycloalkyloxy, 5- oder 6-gliedriges Heterocyclyl, 5- oder 6-gliedriges Heterocyclyloxy, Benzyl, Benzyloxy, Phenyl, Phenoxy, Phenylthio, 5- oder 6-gliedriges Hetaryl, 5- oder 6-gliedriges Hetaryloxy und Hetarylthio, wobei die cyclischen Gruppen ihrerseits partiell oder vollständig halogeniert sein können oder einen bis drei Reste R^{a} tragen können; und
R³ Wasserstoff, C₁-C₆-Alkyl oder C₂-C₆-Alkenyl bedeuten, C₂-C₆-Alkinyl, wobei die Kohlenwasserstoffreste dieser Gruppen unsubstituiert oder durch einen bis drei Reste R^{c} substituiert sind;
und
b) ein Glyphosatederivat II
in einer synergistisch den Ertrag steigernden Menge.

5. Mischung nach Anspruch 4, enthaltend
a) Pyraclosstrobin und
b) ein Glyphosatederivat II.

6. Mischung nach Anspruch 5, wobei Komponente a) zusätzlich zu dem Wirkstoff Pyraclostrobin ein Azol ausgewählt aus der Gruppe: Metconazol, Myclobutanil, Epoxiconazol, Propiconazol, Prothioconazol und Tebuconazol enthält.

## Claims

1. A method for increasing the yield in glyphosate-resistant legumes, which comprises treating the plants with a mixture comprising
a) a compound of the formula I 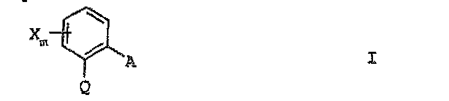 in which
X is halogen, C₁-C₄-alkyl or trifluoromethyl,
m is 0 or 1,
Q is C(=CH-CH₃)-COOCH₃, C(=CH-OCH₃)-COOCH₃,
C(=N-OCH₃)-CONHCH₃, C(=N-OCH₃)-COOCH₃ or
N(-OCH₃) -COOCH₃,
A is -O-B, -CH₂O-B, -OCH₂-B, -CH=CH-B, -C≡C-B, -CH₂O- N=C(R¹)-B or -CH₂O-N=C(R¹)-C(R²)=N-OR³, where
B is phenyl, naphthyl, 5-membered or 6-membered hetaryl or 5-membered or 6-membered heterocyclyl, comprising one to three N atoms and/or one O or S atom or one or two O and/or S atoms, the ring systems being unsubstituted or substituted by one to three radicals R^{a}:
R^{a} being cyano, nitro, amino, aminocarbonyl, aminothiocarbonyl, halogen, C₁-C₆-alkyl, C₁-C₆-haloalkyl, C₁-C₆-alkylcarbonyl, C₁-C₆-alkylsulfonyl, C₁-C₆-alkylsulfoxyl, C₃-C₆-cycloalkyl, C₁-C₆-alkoxy, C₁-C₆-haloalkoxy, C₁-C₆-alkyloxycarbonyl, C₁-C₆-alkylthio, C₁-C₆-alkylamino, di-C₁-C₆-alkylamino, C₁-C₆-alkylaminocarbonyl, di-C₁-C₆-alkylaminocarbonyl,
C₁-C₆-alkylaminothiocarbonyl, di-C₁-C₆-alkylaminothiocarbonyl, C₂-C₆-alkenyl, C₂-C₆-alkenyloxy, phenyl, phenoxy, benzyl, benzyloxy, 5- or 6-membered heterocyclyl, 5- or 6-membered hetaryl, 5- or 6-membered hetaryloxy, C(=NOR')-OR" or OC(R')₂-C(R")=NOR",
the cyclic radicals, in turn, being unsubstituted or substituted by one to three radicals R^{b}:
R^{b} being cyano, nitro, halogen, amino, aminocarbonyl, aminothiocarbonyl, C₁-C₆-alkyl, C₁-C₆-haloalkyl, C₁-C₆-alkylsulfonyl, C₁-C₆-alkylsulfoxyl, C₃-C₆-cycloalkyl, C₁-C₆-alkoxy, C₁-C₆-haloalkoxy, C₁-C₆-alkoxycarbonyl, C₁-C₆-alkylthio, C₁-C₆-alkylamino, di-C₁-C₆-alkylamino, C₁-C₆-alkylaminocarbonyl, di-C₁-C₆-alkylaminocarbonyl, C₁-C₆-alkylaminothiocarbonyl, di-C₁-C₆-alkylaminothiocarbonyl, C₂-C₆-alkenyl, C₂-C₆-alkenyloxy, C₃-C₆-cycloalkyl, C₃-C₆-cycloalkenyl, phenyl, phenoxy, phenylthio, benzyl, benzyloxy, 5- or 6-membered heterocyclyl, 5- or 6-membered hetaryl, 5- or 6-membered hetaryloxy or C(=NOR')-OR",
R' is hydrogen, cyano, C₁-C₆-alkyl, C₃-C₆-cycloalkyl or C₁-C₄-haloalkyl,
R" is hydrogen, C₁-C₆-alkyl, C₃-C₆-alkenyl, C₃-C₆-alkynyl, C₁-C₄-haloalkyl, C₃-C₆-haloalkenyl or C₃-C₆-halcalkynyl,
R¹ is hydrogen, cyano, C₁-C₄-alkyl, C₁-C₄-haloalkyl, C₃-C₆-cycloalkyl or C₁-C₄-alkoxy,
R² is phenyl, phenylcarbonyl, phenylsulfonyl, 5- or 6-membered hetaryl, 5- or 6-membered hetarylcarbonyl or 5- or 6-membered hetarylsulfonyl, the ring systems being unsubstituted or substituted by one to three radicals R^{a},
C₁-C₁₀-alkyl, C₃-C₆-cycloalkyl, C₂-C₁₀-alkenyl, C₂-C₁₀-alkynyl, C₁-C₁₀-alkylcarbonyl, C₂-C₁₀-alkenylcarbonyl, C₃-C₁₀-alkynylcarbonyl, C₁-C₁₀-alkylsulfonyl or C(R')=NOR", the hydrocarbon radicals of these groups being unsubstituted or substituted by one to three radicals R^{c}:
R^{c} being cyano, nitro, amino, aminocarbonyl, aminothiocarbonyl, halogen, C₁-C₆-alkyl, C₁-C₆-haloalkyl, C₁-C₆-alkylsulfonyl, C₁-C₆-alkylsulfoxyl, C₁-C₆-alkoxy, C₁-C₆-haloalkoxy, C₁-C₆-alkoxycarbonyl, C₁-C₆-alkylthio, C₁-C₆-alkylamino, di-C₁-C₆-alkylamino, C₁-C₆-alkylaminocarbonyl, di-C₁-C₆-alkylaminocarbonyl, C₁-C₆-alkylaminothiocarbonyl, di-C₁-C₆-alkylaminothiocarbonyl, C₂-C₆-alkenyl, C₂-C₆-alkenyloxy, C₃-C₆-cycloalkyl, C₃-C₆-cycloalkyloxy, 5- or 6-membered heterocyclyl, 5- or 6-membered heterocyclyloxy, benzyl, benzyloxy, phenyl, phenoxy, phenylthio, 5- or 6-membered hetaryl, 5- or 6-membered hetaryloxy and hetarylthio, it being possible for the cyclic groups, in turn, to be partially or fully halogenated or to have attached to them one to three radicals R^{a}, and
R³ is hydrogen, C₁-C₆-alkyl, C₂-C₆-alkenyl or C₂-C₆-alkynyl, the hydrocarbon radicals of these groups being unsubstituted or substituted by one to three radicals R^{c},
and
b) a glyphosate derivative II
in a synergistically active amount.

2. The method according to claim 1, wherein an active ingredient of the formula Ia 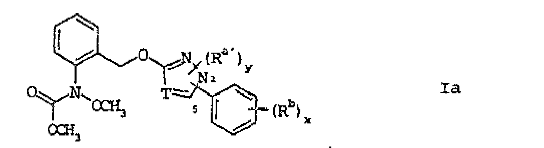 in which T is CH or N and R^{a,} and R^{b} are halogen or C₁-C₄-alkyl, the phenyl group is in the 1- or 5-position and x is 0, 1 or 2 and y is 0 or 1
is used as component a).

3. The method according to claim 1 or 2, wherein a fungicidal azole selected from the group consisting of:
fluquinconazole, metconazole, prochloraz, propiconazole, prothioconazole, tebuconazole, epoxiconazole or myclobutanil is employed as component a) in addition to the active ingredient of the formula I or Ia.

4. A mixture comprising
a) a compound of the formula I 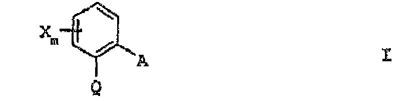 in which
X is halogen, C₁-C₄-alkyl or trifluoromethyl,
m is 0 or 1,
Q is C(=CH-CH₃)-COOCH₃, C(=CH-OCH₃)-COOCH₃,
C(=N-OCH₃)-CONHCH₃, C(=N-OCH₃)-COOCH₃ or
N(-OCH₃) -COOCH₃,
A is -O-B, -CH₂O-B, -OCH₂-B, -CH=CH-B, -C≡C-B, -CH₂O- N=C(R¹)-B or -CH₂O-N=C(R¹)-C(R²)=N-OR³, where
B is phenyl, naphthyl, 5-membered or 6-membered hetaryl or 5-membered or 6-membered heterocyclyl, comprising one to three N atoms and/or one O or S atom or one or two O and/or S atoms, the ring systems being unsubstituted or substituted by one to three radicals R^{a}:
R^{a} being cyano, nitro, amino, aminocarbonyl, aminothiocarbonyl, halogen, C₁-C₆-alkyl, C₁-C₆-haloalkyl, C₁-C₆-alkylcarbonyl, C₁-C₆-alkylsulfonyl, C₁-C₆-alkylaulfoxyl, C₃-C₆-cycloalkyl, C₁-C₆-alkoxy, C₁-C₆-haloalkoxy, C₁-C₆-alkyloxycarbonyl, C₁-C₆-alkylthio, C₁-C₆-alkylamino, di-C₁-C₆-alkylamino, C₁-C₆-alkylaminocarbonyl, di-C₁-C₆-alkylaminocarbonyl, C₁-C₆-alkylaminothiocarbonyl, di-C₁-C₆-alkylaminothiocarbonyl, C₂-C₆-alkenyl, C₂-C₆-alkenyloxy, phenyl, phenoxy, benzyl, benzyloxy, 5- or 6-membered heterocyclyl, 5-or 6-membered hetaryl, 5- or 6-membered hetaryloxy, C(=NOR')-OR" or OC(R')₂- C(R")=NOR",
the cyclic radicals, in turn, being unsubstituted or substituted by one to three radicals R^{b};
R^{b} being cyano, nitro, halogen, amino, aminocarbonyl, aminothiocarbonyl, C₁-C₆-alkyl, C₁-C₆-haloalkyl, C₁-C₆-alkylsulfonyl, C₁-C₆-alkylsulfoxyl, C₃-C₆-cycloalkyl, C₁-C₆-alkoxy, C₁-C₆-haloalkoxy, C₁-C₆-alkoxycarbonyl, C₁-C₆-alkylthio, C₁-C₆-alkylamino, di-C₁-C₆-alkylamino, C₁-C₆-alkylaminocarbonyl, di-C₁-C₆-alkylaminocarbonyl, C₁-C₆-alkylaminothiocarbonyl, di-C₁-C₆-alkylaminothiocarbonyl, C₂-C₆-alkenyl, C₂-C₆-alkenyloxy, C₃-C₆-cycloalkyl, C₃-C₆-cycloalkenyl, phenyl, phenoxy, phenylthio, benzyl, benzyloxy, 5- or 6-membered heterocyclyl, 5- or 6-membered hetaryl, 5- or 6-membered hetaryloxy or C(=NOR')-OR",
R' is hydrogen, cyano, C₁-C₆-alkyl, C₃-C₆-cycloalkyl or C₁-C₄-haloalkyl,
R" is hydrogen, C₁-C₆-alkyl, C₃-C₆-alkanyl, C₃-C₆-alkynyl, C₁-C₄-haloalkyl, C₃-C₆-haloalkenyl or C₃-C₆-haloalkynyl,
R¹ is hydrogen, cyano, C₁-C₄-alkyl, C₁-C₄-haloalkyl, C₃-C₆-cycloalkyl or C₁-C₄-alkoxy,
R² is phenyl, phenylcarbonyl, phenylsulfonyl, 5- or 6-membered hetaryl, 5- or 6-membered hetarylcarbonyl or 5- or 6-membered hetarylsulfonyl, the ring systems being unsubstituted or substituted by one to three radicals R^{a},
C₁-C₁₀-alkyl, C₃-C₆-cycloalkyl, C₂-C₁₀-alkenyl, C₂-C₁₀-alkynyl, C₁-C₁₀-alkylcarbonyl, C₂-C₁₀-alkenylcarbonyl, C₃-C₁₀-alkynylcarbonyl, C₁-C₁₀-alkylsulfonyl or C(R')=NOR", the hydrocarbon radicals of these groups being unsubstituted or substituted by one to three radicals R^{c}:
R^{c} being cyano, nitro, amino, aminocarbonyl, aminothiocarbonyl, halogen, C₁-C₆-alkyl, C₁-C₆-haloalkyl, C₁-C₆-alkylsulfonyl, C₁-C₆-alkylsulfoxyl, C₁-C₆-alkoxy, C₁-C₆-haloalkoxy, C₁-C₆-alkoxycarbonyl, C₁-C₆-alkylthio, C₁-C₆-alkylamino, di-C₁-C₆-alkylamino, C₁-C₆-alkylaminocarbonyl, di-C₁-C₆-alkylaminocarbonyl, C₁-C₆-alkylaminothiocarbonyl, di-C₁-C₆-alkylaminothiocarbonyl, C₂-C₆-alkenyl, C₂-C₆-alkenyloxy, C₃-C₆-cycloalkyl, C₃-C₆-cycloalkyloxy, 5- or 6-membered heterocyclyl, 5- or 6-membered heterocyclyloxy, benzyl, benzyloxy, phenyl, phenoxy, phenylthio, 5- or 6-membered hetaryl, 5- or 6-membered hetaryloxy and hetarylthio, it being possible for the cyclic groups, in turn, to be partially or fully halogenated or to have attached to them one to three radicals R^{a}, and
R³ is hydrogen, C₁-C₆-alkyl or C₂-C₆-alkenyl or C₂-C₆-alkynyl, the hydrocarbon radicals of these groups being unsubstituted or substituted by one to three radicals R^{c},
and
b) a glyphosate derivative II
in such an amount that the yield is increased synergistically.

5. The mixture according to claim 4, comprising
a) pyraclostrobin and
b) a glyphosate derivative II.

6. The mixture according to claim 5, wherein component a) comprises an azole selected from the group consisting of: metconazole, myclobutanil, epoxiconazole, propiconazole, prothioconazole and tebuconazole in addition to the active ingredient pyraclostrobin.

## Revendications

1. Procédé d'augmentation de rendement de légumineuses résistant au glyphosate, **caractérisé en ce que** les plantes sont traitées par un mélange contenant :
a) un composé de la formule I 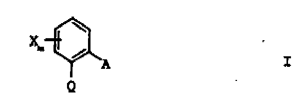 dans laquelle :
X représente un halogène, un radical alkyle en C₁ à C₄ ou trifluorométhyle,
m vaut 0 ou 1,
Q représente C(=CH-CH₃)-COOCH₃, C(=CH-OCH₃)-COOCH₃,
C(=N-OCH₃)-CONHCH₃, C(=N-OCH₃)-COOCH₃ ou
N (-OCH₃) -COOCH₃,
A représente -O-B, -CH₂O-B, -OCH₂-B, -CH=CH-B, -C≡C-B, -CH₂O-N=C(R¹)-B ou -CH₂O-N=C(R¹)-C(R²)=N-OR³, avec
B représentant un radical phényle, naphtyle, hétéroaryle à 5 membres ou à 6 membres ou hétérocyclyle à 5 membres ou à 6 membres, contenant de un à trois atomes de N et/ou un atome de O ou de S ou bien un ou deux atomes de O et/ou de S, les systèmes cycliques pouvant être non substitués ou substitués par un à trois radicaux R^{a},
R^{a} étant un radical cyano, nitro, amino, aminocarbonyle, aminothiocarbonyle, halogéno, alkyle en C₁ à C₆, halogénoalkyle en C₁ à C₆, alkylcarbonyle en C₁ à C₆, alkylsulfonyle en C₁ à C₆, alkylsulfoxyle en C₁ à C₆, cycloalkyle en C₃ à C₆, alcoxy en C₁ à C₆, halogénoalcoxy en C₁ à C₆, alkyloxycarbonyle en C₁ à C₆, alkylthio en C₁ à C₆, alkylamino en C₁ à C₆, di(C₁-C₆)alkylamino, alkylaminocarbonyle en C₁ à C₆, di(C₁-C₆)alkylaminocarbonyle, alkylaminothiocarbonyle en C₁ à C₆, di(C₁-C₆)alkylaminothiocarbonyle, alcényle en C₂ à C₆, alcényloxy en C₂ à C₆, phényle, phénoxy, benzyle, benzyloxy, hétérocyclyle à 5 ou 6 membres, hétaryle à 5 ou 6 membres, hétaryloxy à 5 ou 6 membres, C(=NOR')-OR" ou OC(R')₂-C(R")=NOR",
où les radicaux cycliques sont de leur côté non substitués ou substitués par un à trois radicaux R^{b},
R^{b} étant un radical cyano, nitro, halogéno, amino, aminocarbonyle, aminothiocarbonyle, alkyle en C₁ à C₆, halogénoalkyle en C₁ à C₆, alkylsulfonyle en C₁ à C₆, alkylsulfoxyle en C₁ à C₆, cycloalkyle en C₃ à C₆, alcoxy en C₁ à C₆, halogénoalcoxy en C₁ à C₆, alcoxycarbonyle en C₁ à C₆, alkylthio en C₁ à C₆, alkylamino en C₁ à C₆, di (C₁-C₆) alkylamino, alkylaminocarbonyle en C₁ à C₆, di(C₁-C₆) alkylaminocarbonyle, alkylamino-thiocarbonyle en C₁ à C₆, di(C₁-C₆) alkylaminothiocarbonyle, alcényle en C₂ à C₆, alcényloxy en C₂ à C₆, cycloalkyle en C₃ à C₆, cycloalcényle en C₃ à C₆, phényle, phénoxy, phénylthio, benzyle, benzyloxy, hétérocyclyle à 5 ou 6 membres, hétaryle à 5 ou 6 membres, hétaryloxy à 5 ou 6 membres ou C(=NOR')-OR",
R' étant de l'hydrogène ou un radical cyano, alkyle en C₁ à C₆, cycloalkyle en C₃ à C₆ ou halogénoalkyle en C₁ à C₄,
R" étant de l'hydrogène ou un radical alkyle en C₁ à C₆, alcényle en C₃ à C₆, alcynyle en C₃ à C₆, halogénoalkyle en C₁ à C₄, halogénoalcényle en C₃ à C₆ ou halogénoalcynyle en C₃ à C₆,
R¹ étant de l'hydrogène ou un radical cyano, alkyle en C₁ à C₄, halogénoalkyle en C₁ à C₄, cycloalkyle en C₃ à C₆, alcoxy en C₁ à C₄,
R² étant un radical phényle, phénylcarbonyle, phénylsulfonyle, hétaryle à 5 ou 6 membres, hétarylcarbonyle à 5 ou 6 membres ou hétarylsulfonyle à 5 ou 6 membres, les systèmes cycliques étant non substitués ou substitués par un à trois radicaux R^{a},
alkyle en C₁ à C₁₀, cycloalkyle en C₃ à C₆, alcényle en C₂ à C₁₀, alcynyle en C₂ à C₁₀, alkylcarbonyle en C₁ à C₁₀, alcénylcarbonyle en C₂ à C₁₀, alcynylcarbonyle en C₃ à C₁₀, alkylsulfonyle en C₁ à C₁₀, ou C(R')=NOR", les radicaux hydrocarbonés de ces groupes étant non substitués ou substitués par un à trois radicaux R^{c}:
R^{c} étant un radical cyano, nitro, amino, aminocarbonyle, aminothiocarbonyle, halogéno, alkyle en C₁ à C₆, halogénoalkyle en C₁ à C₆, alkylsulfonyle en C₁ à C₆, alkylsulfoxyle en C₁ à C₆, alcoxy en C₁ à C₆, halogénoalcoxy en C₁ à C₆, alcoxycarbonyle en C₁ à C₆, alkylthio en C₁ à C₆, alkylamino en C₁ à C₆, di(C₁-C₆) alkylamino, alkylaminocarbonyle en C₁ à C₆, di(C₁-C₆)alkylaminocarbonyle, alkylamino-thiocarbonyle en C₁ à C₆, di(C₁-C₆)alkylaminothiocarbonyle, alcényle en C₂ à C₆, alcényloxy en C₂ à C₆, cycloalkyle en C₃ à C₆, cycloalkyloxy en C₃ à C₆, hétérocyclyle à 5 ou 6 membres, hétérocyclyloxy à 5 ou 6 membres, benzyle, benzyloxy, phényle, phénoxy, phénylthio, hétaryle à 5 ou 6 membres, hétaryloxy et hétarylthio à 5 ou 6 membres, les groupes cycliques pouvant de leur côté être totalement ou partiellement halogénés ou porter un à trois radicaux R^{a}, et
R³ étant de l'hydrogène ou un radical alkyle en C₁ à C₆, alcényle en C₂ à C₆ ou alcynyle en C₂ à C₆, les radicaux hydrocarbonés de ces groupes étant non substitués ou substitués par un à trois radicaux R^{c},
et
b) un dérivé de glyphosate II
en une quantité synergiquement efficace.

2. Procédé suivant la revendication 1, dans lequel on utilise en tant que composant a) un agent actif de formule Ia 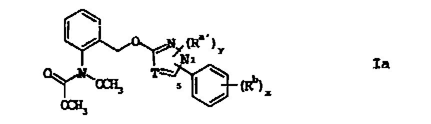 dans laquelle T représente CH ou N et R^{a'} et R^{b} représentent de l'halogène ou des radicaux alkyle en C₁ à C₄, le groupe phényle se trouve en position 1 ou 5 et x vaut 0, 1 ou 2 et y vaut 0 ou 1.

3. Procédé suivant l'une quelconque des revendications 1 ou 2, dans lequel on met en oeuvre en plus de l'agent actif de formule I ou la, en tant que composant a), un azole fongicide choisi dans le groupe formé par : le fluquinconazole, le metconazole, le prochloraz, le propiconazole, le prothioconazole, le tébuconazole, l'époxyconazole ou le myclobutanil.

4. Mélange contenant :
a) un composé de formule I 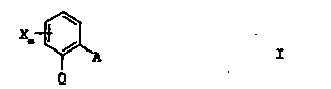 dans laquelle :
X représente un halogène, un radical alkyle en C₁ à C₄ ou trifluorométhyle,
m vaut 0 ou 1,
Q représente C(=CH-CH₃)-COOCH₃, C(=CH-OCH₃)-COOCH₃,
C(=N-OCH₃)-CONHCH₃, C(=N-OCH₃)-COOCH₃ ou
N(-OCH₃) COOCH₃,
A représente -O-B, -CH₂O-B, -OCH₂-B, -CH=CH-B, -C≡C-B, -CH₂O-N=C(R¹)-B ou -CH₂O-N=C(R¹)-C(R²)=N-OR³, avec
B représentant un radical phényle, naphtyle, hétéroaryle à 5 membres ou à 6 membres ou hétérocyclyle à 5 membres ou à 6 membres, contenant de un à trois atomes de N et/ou un atome de O ou de S ou bien un ou deux atomes de O et/ou de S, les systèmes cycliques pouvant être non substitués ou substitués par un à trois radicaux R^{a},
R^{a} étant un radical cyano, nitro, amino, aminocarbonyle, aminothiocarbonyle, halogéno, alkyle en C₁ à C₆, halogénoalkyle en C₁ à C₆, alkylcarbonyle en C₁ à C₆, alkylsulfonyle en C₁ à C₆, alkylsulfoxyle en C₁ à C₆, cycloalkyle en C₃ à C₆, alcoxy en C₁ à C₆, halogénoalcoxy en C₁ à C₆, alkyloxycarbonyle en C₁ à C₆, alkylthio en C₁ à C₆, alkylamino en C₁ à C₆, di(C₁-C₆)alkylamino, alkylaminocarbonyle en C₁ à C₆, di (C₁-C₆) alkylaminocarbonyle, alkylaminothiocarbonyle en C₁ à C₆, di(C₁-C₆)alkylaminothiocarbonyle, alcényle en C₂ à C₆, alcényloxy en C₂ à C₆, phényle, phénoxy, benzyle, benzyloxy, hétérocyclyle à 5 ou 6 membres, hétaryle à 5 ou 6 membres, hétaryloxy à 5 ou 6 membres, C(=NOR')-OR" ou OC(R')₂-C(R")=NOR",
où les radicaux cycliques sont de leur côté non substitués ou substitués par un à trois radicaux R^{b},
R^{b} étant un radical cyano, nitro, halogéno, amino, aminocarbonyle, aminothiocarbonyle, alkyle en C₁ à C₆, halogénoalkyle en C₁ à C₆, alkylsulfonyle en C₁ à C₆, alkylsulfoxyle en C₁ à C₆, cycloalkyle en C₃ à C₆, alcoxy en C₁ à C₆, halogénoalcoxy en C₁ à C₆, alcoxycarbonyle en C₁ à C₆, alkylthio en C₁ à C₆, alkylamino en C₁ à C₆, di(C₁-C₆)alkylamino, alkylaminocarbonyle en C₁ à C₆, di(C₁-C₆) alkylaminocarbonyle, alkylamino-thiocarbonyle en C₁ à C₆, di(C₁-C₆)alkylaminothiocarbonyle, alcényle en C₂ à C₆, alcényloxy en C₂ à C₆, cycloalkyle en C₃ à C₆, cycloalcényle en C₃ à C₆, phényle, phénoxy, phénylthio, benzyle, benzyloxy, hétérocyclyle à 5 ou 6 membres, hétaryle à 5 ou 6 membres, hétaryloxy à 5 ou 6 membres ou C(=NOR')-OR",
R' étant de l'hydrogène ou un radical cyano, alkyle en C₁ à C₆, cycloalkyle en C₃ à C₆ ou halogénoalkyle en C₁ à C₄,
R" étant de l'hydrogène ou un radical alkyle en C₁ à C₆, alcényle en C₃ à C₆, alcynyle en C₃ à C₆, halogénoalkyle en C₁ à C₄, halogénoalcényle en C₃ à C₆ ou halogénoalcynyle en C₃ à C₆,
R¹ étant de l'hydrogène ou un radical cyano, alkyle en C₁ à C₄, halogénoalkyle en C₁ à C₄, cycloalkyle en C₃ à C₆, alcoxy en C₁ à C₄,
R² étant un radical phényle, phénylcarbonyle, phénylsulfonyle, hétaryle à 5 ou 6 membres, hétarylcarbonyle à 5 ou 6 membres ou hétarylsulfonyle à 5 ou 6 membres, les systèmes cycliques étant non substitués ou substitués par un à trois radicaux R^{a},
alkyle en C₁ à C₁₀, cycloalkyle en C₃ à C₆, alcényle en C₂ à C₁₀, alcynyle en C₂ à C₁₀, alkylcarbonyle en C₁ à C₁₀, alcénylcarbonyle en C₂ à C₁₀, alcynylcarbonyle en C₃ à C₁₀, alkylsulfonyle en C₁ à C₁₀, ou C(R')=NOR", les radicaux hydrocarbonés de ces groupes étant non substitués ou substitués par un à trois radicaux R^{c} :
R^{c} étant un radical cyano, nitro, amino, aminocarbonyle, aminothiocarbonyle, halogéno, alkyle en C₁ à C₆, halogénoalkyle en C₁ à C₆, alkylsulfonyle en C₁ à C₆, alkylsulfoxyle en C₁ à C₆, alcoxy en C₁ à C₆, halogénoalcoxy en C₁ à C₆, alcoxycarbonyle en C₁ à C₆, alkylthio en C₁ à C₆, alkylamino en C₁ à C₆, di(C₁-C₆)alkylamino, alkylaminocarbonyle en C₁ à C₆, di(C₁-C₆)alkylaminocarbonyle, alkylamino-thiocarbonyle en C₁ à C₆, di(C₁-C₆)alkylaminothiocarbonyle, alcényle en C₂ à C₆, alcényloxy en C₂ à C₆, cycloalkyle en C₃ à C₆, cycloalkyloxy en C₃ à C₆, hétérocyclyle à 5 ou 6 membres, hétérocyclyloxy à 5 ou 6 membres, benzyle, benzyloxy, phényle, phénoxy, phénylthio, hétaryle à 5 ou 6 membres, hétaryloxy et hétarylthio à 5 ou 6 membres, les groupes cycliques pouvant de leur côté être totalement ou partiellement halogénés ou porter un à trois radicaux R^{a}, et
R³ étant de l'hydrogène ou un radical alkyle en C₁ à C₆, alcényle en C₂ à C₆ ou alcynyle en C₂ à C₆, les radicaux hydrocarbonés de ces groupes étant non substitués ou substitués par un à trois radicaux R^{c},
et
b) un dérivé de glyphosate II
en une quantité augmentant le rendement de manière synergique.

5. Mélange suivant la revendication 4, contenant :
a) de la pyraclostrobine et
b) un dérivé de glyphosate II.

6. Mélange suivant la revendication 5, dans lequel le composant a) contient, outre l'agent actif de pyraclostrobine, un azole choisi dans le groupe formé par le metconazole, le myclobutanil, l'époxyconazole, le propiconazole, le prothioconazole et le tébuconazole.
